# EUROPÄISCHE PATENTSCHRIFT

(11) **EP 0 541 894 B1**
(45) Veröffentlichungstag und Bekanntmachung des Hinweises auf die Patenterteilung: **08.11.1995**
(21) Anmeldenummer: 92108641.9
(22) Anmeldetag: 22.05.1992
(51) Int. Cl.: F16J 15/32

(54) **Dichtungsanordnung**
Seal arrangement
Dispositif d'étanchéité

(30) Priorität: 14.11.1991 DE 4137461
(43) Veröffentlichungstag der Anmeldung: 19.05.1993
(73) Patentinhaber: Firma Carl Freudenberg, 69469 Weinheim (DE)
(72) Erfinder: Siegrist, Uwe, W-3579 Ottrau (DE); Freitag, Edgar, Dr. rer. nat., W-3578 Schwalmstadt 1 (DE)

(56) Entgegenhaltungen:
- EP-A- 0 156 942
- EP-A- 0 277 484
- EP-A- 0 321 280
- DE-A- 3 016 231
- DE-A- 3 920 475
- DE-U- 8 802 162

## Beschreibung

Die Erfindung betrifft eine Dichtungsanordnung zur Abdichtung eines Umfangsspaltes zwischen zwei im wesentlichen nur translatorisch zueinander bewegbaren Teilen, wobei die Teile durch ein Innen- und ein Außenteil gebildet sind, die durch den Umfangsspalt getrennt und konzentrisch zueinander angeordnet sind und während der bestimmungsgemäßen Verwendung mit gleicher Drehzahl um eine gemeinsame Rotationsachse bewegbar sind, umfassend eine Fliehkraftdichtung, die in eine in Richtung des Umfangsspaltes geöffnete Nut des Innenteiles unter axialer Vorspannung eingeschnappt ist und zumindest eine der axialen Begrenzungsflächen der Nut mit zumindest einer Axialdichtlippe anliegend berührt und bei steigender Drehzahl durch ein fliehkraftbeaufschlagtes Steuermedium zusätzlich in radialer Richtung elastisch aufweitbar und an die dem Umfangsspalt zugewandte Innenseite des Außenteiles mit zumindest einer Radialdichtlippe anlegbar ist.

Eine solche Dichtungsanordnung ist aus der technisch-wissenschaftlichen Dokumentation Nr. 1, zweite überarbeitete Auflage, 1983, der Firma Westfalia Separator AG, Seite 33, Bild 45, bekannt. Die in axialer Richtung translatorische Bewegung des als Schleuderraumboden ausgebildeten Innenteils wird mit Hilfe eines Steuermediums gesteuert, so daß zum Druckaufbau und für die einwandfreie Funktion des Separators eine zuverlässige Abdichtung zwischen dem Schleuderraumboden und dem als Außenteil ausgebildeten Gehäuse gewährleistet sein muß. Die Fliehkraftdichtung weist dabei einen im wesentlichen rechteckigen oder quadratischen Querschnitt auf und berührt während der bestimmungsgemäßen Verwendung des Separators die Innenseite des Gehäuses und zumindest eine axiale Begrenzungsfläche der Nut flächig anliegend. Das Gehäuse weist beispielsweise eine in radialer Richtung angeordnete Austrittsöffnung auf, die durch den relativ zum Gehäuse in axialer Richtung hin- und herbewegbaren Schleuderraumboden freigegeben bzw. geschlossen werden kann.

Hierbei ist von Nachteil, daß die Abdichtung des Umfangsspaltes während einer langen Gebrauchsdauer wenig befriedigend ist. Funktionsbeeinträchtigungen der Steuerung des Innenteiles sind dadurch bedingt.

In der DE-30 16 231 A1 ist eine Dichtungsanordnung zum Abdichten von Anschlußplatten, Zylindern oder Stangen in hydraulischen Systemen mit starken Druckpulsationen beschrieben und gezeigt. Die Dichtung ist in einer in Richtung einer Ventilstange geöffneten Nut eines Gehäuseteils angeordnet, das die Ventilstange mit radialem Abstand umfangsseitig umschließt. Die Dichtung ist mit nur zwei Dichtkanten versehen, von denen eine der Dichtkanten in der Einbaulage die Ventilstange unter radialer Vorspannung dichtend umschließt und die andere Dichtkante an einer axialen Begrenzungswandung der Nut dichtend anliegt. Jede der Dichtkanten ist durch einander durchschneidende Kegelflächen begrenzt, wobei zur Erzeugung eines Axialdrucks am Umfang der Dichtung Nocken vorgesehen sind, die in axialer Richtung über die Unterdruckseite der Dichtung ragen. Die Nocken sind gleichmäßig in Umfangsrichtung verteilt über die Dichtung angeordnet, einstückig mit der Dichtung ausgebildet und weisen einen rechteckigen Querschnitt auf. Die gesamte Höhe der Dichtung ist kleiner als die Anbauhöhe der Nut, um beim Einsetzen der Dichtung in die Nut eine elastische Verformung und Vorspannung zu erzielen. Der Verschleiß, der die abzudichtende Stange umschließenden Dichtlippe ist vergleichsweise hoch.

Der Erfindung liegt die Aufgabe zugrunde, eine Dichtungsanordnung der eingangs genannten Art derart weiterzuentwickeln, daß sich verbesserte Gebrauchseigenschaffen während einer längeren Gebrauchsdauer ergeben.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es zur Lösung der Aufgabe vorgesehen, daß die Fliehkraftdichtung zwei Radialdichtlippen aufweist, daß die Axialdichtlippe und die dem Steuermedium zugewandte Radialdichtlippe der Fliehkraftdichtung eine diagonale Dichtebene bilden, die mit der Rotationsachse einen Winkel von 15 ° bis 75 ° einschließt und daß die dem Steuermedium zugewandte Radialdichtlippe derart ausgebildet ist, daß ihre Anpressung an die Innenseite des Außenteils geringer ist, als die Anpressung der dem Steuermedium abgewandten Radialdichtlippe. Der Winkel beträgt bevorzugt 30 bis 60 °. Hierbei ist von Vorteil, daß der Umfangsspalt zwischen den konzentrisch zueinander angeordneten Teilen durch exakt definierte Dichtflächen der Fliehkraftdichtung abgedichtet wird. Verkantungserscheinungen der Kippbewegungen der Fliehkraftdichtung treten bei einer derartigen Ausgestaltung nicht auf. Durch die zum Stand der Technik relativ verringerte Auflagefläche ist die spezifische Anpressung der Dichtkanten an die Gegenflächen vergrößert, was zu besseren Abdichtungsergebnissen führt.

Eine hohe Abdichtungsleistung wird dadurch erreicht, daß die Fliehkraftdichtung zwei Radialdichtlippen aufweist, die einander in axialer Richtung mit Abstand benachbart zugeordnet sind. Die dem Steuermedium zugewandte Radialdichtlippe ist derart ausgebildet, daß die Anpressung an die Innenwand des Außenteiles während der bestimmungsgemäßen Verwendung geringer ist, als die Anpressung der dem Steuermedium abgewandten Radialdichtlippe. Dadurch wird verhindert, daß bei Rotation des Innenteiles und des Außenteiles um die gemeinsame Rotationsachse ein Überdruck zwischen den Radialdichtlippen entsteht, der zu Undichtigkeiten der Dichtungsanordnung führen könnte.

Außerdem führt geringer Verschleiß an den Dichtlippen der Fliehkraftdichtung nicht wie beim Stand der Technik unmittelbar zu Undichtigkeiten sondern die Dichtleistung bleibt während der bestimmungsgemäßen Verwendung wesentlich länger erhalten.

Gemäß einer vorteilhatten Ausgestaltung ist es vorgesehen, daß der Axialdichtlippe und der Radialdichtlippe auf der dem Steuermedium abgewandten Seite ein Backring vorgeschaltet ist, daß der Backring in der Nut des Innenteiles angeordnet ist und den Umfangsspalt zumindest während der bestimmungsgemäßen Verwendung zumindest teilweise in radialer Richtung überdeckt. Der Backring kann beispielsweise aus Polytetraflourethylen bestehen und weist in diesem Falle besonders gute Gleiteigenschaffen auf, was die Relativbeweglichkeit in radialer Richtung bei Rotation der Vorrichtung und evtl. Druckbeaufschlagung der Fliehkraftdichtung deutlich verbessert. Der Backring hat die Aufgabe, Spaltextrusion zu vermeiden, wodurch die Gebrauchsdauer der Fliehkraftdichtung weiter verbessert wird.

Die Fliehkraftdichtung in der Dichtungsanordnung kann verschiedenartig ausgestaltet sein, beispielsweise als Kompaktdichtung oder als Lippendichtung. Der Vorteil von Kompaktdichtungen ist darin zu sehen, daß sie aufgrund ihrer Ausgestaltung gleichbleibend gute Gebrauchseigenschaffen während einer sehr langen Gebrauchsdauer aufweisen. Relaxationserscheinungen sind nicht zu befürchten. Relativ flexiblere Lippendichtungen gewährleisten auch bei Beaufschlagung mit Steuermedium unter geringem Steuerdruck eine fein dosierbare Anpressung an die angrenzenden Dichtflächen der rotierenden Teile. Die zur Anwendung gelangenden Kompaktdichtungen sind im wesentlichen rechteckig, die zur Anwendung gelangenden Lippendichtungen im wesentlichen L- bzw. U-förmig ausgebildet.

Die Fliehkraftdichtung kann auf der dem Nutgrund zugewandten Seite einstückig angeformte Abstandhalter aufweisen, wobei nur die Abstandhalter mit dem Nutgrund in Berührung bringbar sind. Hierbei ist von Vorteil, daß bei dieser Ausgestaltung der Druck des Steuermediums bei Bedarf sofort im Nutgrund wirksam werden kann und bei Rotation der Dichtungsanordnung eine radial nach außengerichtete Kraft auf die Fliehkraftdichtung wirksam wird. Eine Änderung des Steuerdruckes auf das Steuermedium bewirkt eine translatorische Relativbewegung geringen Hubes des Innen- und des Außenteiles zueinander.

Zur Anwendung gelangt die beanspruchte Dichtungsanordnung bevorzugt zur Abdichtung einer rotierenden, mit Steuermedium druckbeaufschlagten und axial hin- und herbewegbaren Separatorentrommel in einem mit zumindest einer im wesentlichen radialen Austrittsöffnung versehenen Gehäuse eines selbstentleerenden Separators, wobei die Austrittsöffnung durch die axial bewegliche Separatorentrommel zu öffnen bzw. verschließbar ist. Das Innenteil wird in diesem Falle von einem Schleuderraumboden gebildet, der radial innerhalb des Gehäuses einer Separatorentrommel angeordnet ist und während der bestimmungsgemäßen Verwendung mit dieser um eine gemeinsame Rotationsachse rotiert. Die vorgeschlagene Dichtungsanordnung dichtet das Steuermedium, das die translatorische Hin- und Herbewegung des Schleuderraumbodens bedingt gegen das Gehäuse und zur Erzeugung eines Druckaufbaues ab.

Die erfindungsgemäße Dichtungsanordnung wird nachfolgend anhand der als Anlage beigefügten Zeichnungen weiter erläutert.

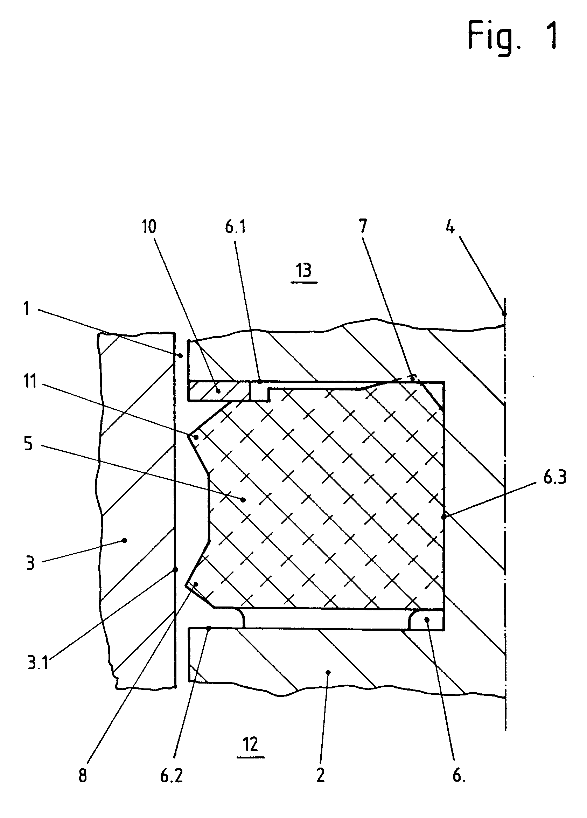

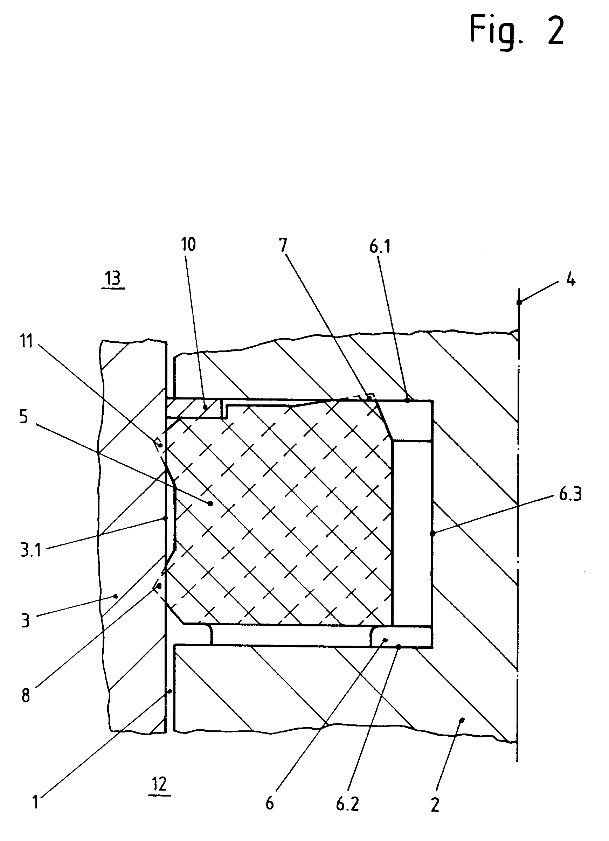

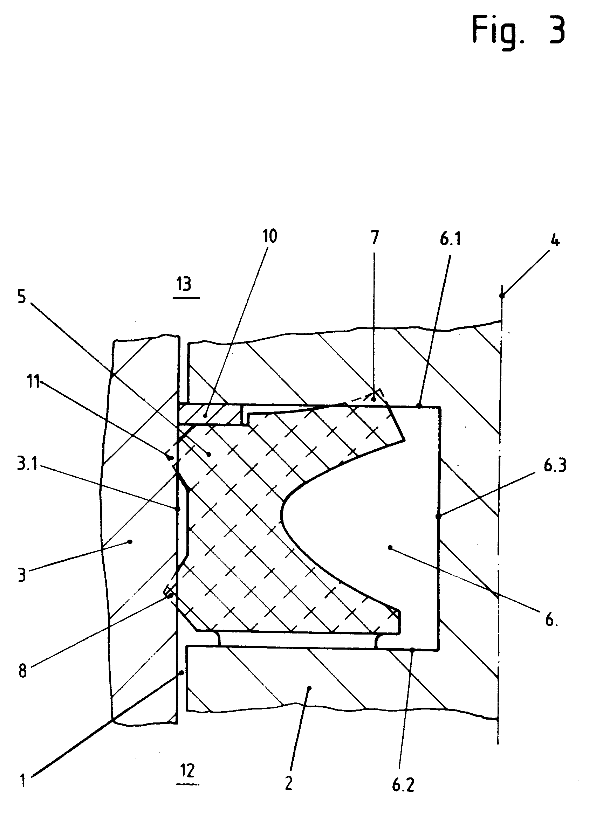

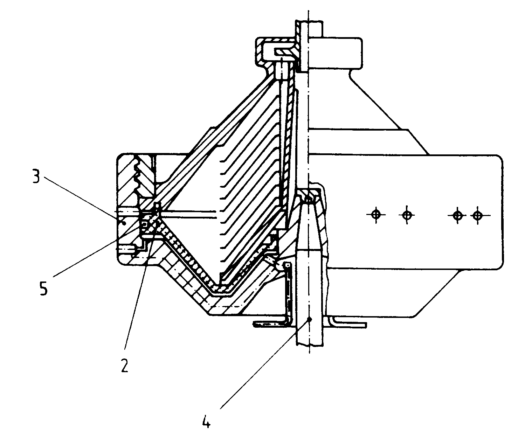

In den Figuren 1 bis 3 sind zwei Ausgestaltungsbeispiele der beanspruchten Dichtungsanordnung in halbgeschnittener Darstellung und als Ausschnitt gezeigt, wobei die Fliehkraftdichtung in den Figuren 1 und 2 als Kompaktdichtung ausgeführt ist, in Figur 1 bei stillstehendem Innen- und Außenteil und in Figur 2 während der bestimmungsgemäßen Verwendung gezeigt ist. Die Figur 3 zeigt eine Fliehkraftdichtung, ähnlich wie in Figur 2. In den Figur 3 ist die Fliehkraftdichtung als Lippendichtung ausgeführt. In Figur 4 ist ein selbstentleerender Separator dargestellt, in dem die erfindungsgemäße Dichtungsvorrichtung zur Anwendung gelangt.

In den Figuren 1 bis 4 ist eine Dichtungsanordnung zur Abdichtung eines Umfangsspaltes 1 zwischen einem Innenteil 2 und einem Außenteil 3 gezeigt, die im wesentlichen nur translatorisch zueinander bewegbar sind. Das Innenteil 2 und das Außenteil 3 sind durch den Umfangsspalt 1 voneinander getrennt, konzentrisch zueinander angeordnet und mit gleicher Drehzahl um eine gemeinsame Rotationsachse 4 bewegbar.

In Figur 1 liegt die Fliehkraftdichtung 5 bei stillstehendem Innen- 2 und Außenteil 3 aus Montagegründen im Nutgrund 6.3 der in Richtung des Umfangsspaltes 1 geöffneten Nut 6 des Innenteiles 2 unter axialer Vorspannung an. Die Axialdichtlippe 7 wird mit einem axialen Übermaß in die Nut 6 gepreßt.

Die in diesem Beispiel vorhandenen Radialdichtlippen 8, 11 sind axial mit Abstand zueinander benachbart angeordnet und trennen die Medienräume 12 und 13 nicht. Mit zunehmender Drehzahl von Innen- 2 und Außenteil 3 wird die Fliehkraftdichtung 5 in radialer Richtung nach außen elastisch aufgeweitet und gedehnt. Die in radialer Richtung nach außen gerichtete Kraft, die proportional zum Quadrat der Drehzahl ist, erzeugt eine Anpreßkraft der Radialdichtlippen 8 und 11 an der dem Umfangsspalt 1 zugewandten Innenseite 3.1 des Außenteiles 3, wie in Figur 2 dargestellt.

In Figur 2 dichten die beiden Radialdichtlippen 8, 11 und die Axialdichtlippe 7 die Medienräume 12, 13 voneinander ab. Der Steuerdruck des Steuermediums, das die Fliehkraftdichtung 5 vom ersten Medienraum 12 ausgehend mit Druck beaufschlagt, bewirkt eine zusätzliche Anpressung der Radialdichtlippen 8 und 11 an das Außenteil 3. Der Druckwechsel im ersten Medienraum 12 bewirkt nur eine translatorische Relativbewegung des Innen- 2 und des Außenteiles 3 zueinander.

In Figur 3 ist eine Dichtungsanordnung gezeigt, die im wesentlichen Figur 2 entspricht, wobei die Fliehkraftdichtung 5 in diesem Fall allerdings als Lippendichtung ausgebildet ist. In den Figuren 2 und 3 ist der Druck innerhalb des Medienraumes 12 größer oder gleich dem Druck innerhalb des Medienraumes 13. In Figur 3 wirkt der Druck aus Medienraum 12 auf die gewölbten Innenflächen der Fliehkraftdichtung 5 und bewirkt dadurch eine zusätzliche Anpressung sowohl der Axialdichtlippe 7 als auch der Radialdichtlippen 8 und 11 an die angrenzenden Dichtflächen von Innen- und Außenteil 2,3.

In Figur ist ein an sich bekannter selbstentleerender Separator gezeigt, in dem die erfindungsgemäße Dichtungsanordnung zur Anwendung gelangt. Die Fliehkraftdichtung 5 ist in einer Nut des Schleuderraumbodens angeordnet und dichtet den Umfangsspalt 1 zwischen dem als Innenteil 2 ausgebildeten Schleuderraumboden und dem als Gehäuseteil ausgebildeten Außenteil 3 während der bestimmungsgemäßen Verwendung ab. Das Innenteil 2 bewegt sich in Abhängigkeit von der Druckbeaufschlagung des Steuermediums in axialer Richtung, bezogen auf das Außenteil 3 hin und her und gibt die Auslaßöffnung bedarfsweise frei.

## Patentansprüche

1. Dichtungsanordnung zur Abdichtung eines Umfangsspaltes (1) zwischen zwei im wesentlichen nur translatorisch zueinander bewegbaren Teilen, wobei die Teile durch ein Innen-(2) und ein Außenteil (3) gebildet sind, die durch den Umfangsspalt (1) getrennt und konzentrisch zueinander angeordnet sind und während der bestimmungsgemäßen Verwendung mit gleicher Drehzahl um eine gemeinsame Rotationsachse (4) bewegbar sind, umfassend eine Fliehkraftdichtung (5), die in eine in Richtung des Umfangsspalts (1) geöffnete Nut (6) des Innenteiles (2) unter axialer Vorspannung eingeschnappt ist und zumindest eine der axialen Begrenzungsflächen (6.1, 6.2) der Nut (6) mit zumindest einer Axialdichtlippe (7) anliegend berührt und bei steigender Drehzahl durch ein fliehkraftbeaufschlagtes Steuermedium zusätzlich in radialer Richtung elastisch aufweitbar und an die dem Umfangsspalt (1) zugewandte Innenseite (3.1) des Außenteiles (3) mit zumindest einer Radialdichtlippe (8, 11) anlegbar ist, dadurch gekennzeichnet, daß die Fliehkraftdichtung (5) zwei Radialdichtlippen (8, 11) aufweist, daß die Axialdichtlippe (7) und die dem Steuermedium zugewandte Radialdichtlippe (8) der Fliehkraftdichtung (5) eine diagonale Dichtebene (9) bilden, die mit der Rotationsachse (4) einen Winkel von 15 bis 75° einschließt und daß die dem Steuermedium zugewandte Radialdichtlippe (8) derart ausgebildet ist, daß ihre Anpressung an die Innenseite (3.1) des Außenteils (3) geringer ist, als die Anpressung der dem Steuermedium abgewandten Radialdichtlippe (11).

2. Dichtungsanordnung nach Anspruch 1, dadurch gekennzeichnet, daß der Winkel 30 bis 60 ° beträgt.

3. Dichtungsanordnung nach Anspruch 1 bis 2, dadurch gekennzeichnet, daß der Axialdichtlippe (7) und der Radialdichtlippe (8) auf der dem Steuermedium abgewandten Seite ein Backring (10) vorgeschaltet ist, daß der Backring (10) in der Nut (6) des Innenteiles (2) angeordnet ist und den Umfangsspalt (1) zumindest während der bestimmungsgemäßen Verwendung zumindest teilweise in radialer Richtung überdeckt.

4. Dichtungsanordnung nach Anspruch 1 bis 3, dadurch gekennzeichnet, daß die beiden Radialdichtlippen (8, 11) der Fliehkraftdichtung (5) einander in axialer Richtung mit Abstand benachbart zugeordnet sind.

5. Dichtungsanordnung nach Anspruch 1 bis 4, dadurch gekennzeichnet, daß die Fliehkraftdichtung (5) als Kompaktdichtung ausgeführt ist.

6. Dichtungsanordnung nach Anspruch 1 bis 4, dadurch gekennzeichnet, daß die Fliehkraftdichtung (5) als Lippendichtung ausgebildet ist.

7. Dichtungsanordnung nach Anspruch 1 bis 6, dadurch gekennzeichnet, daß die Fliehkraftdichtung (5) auf der dem Nutgrund (6.3) zugewandten Seite einstückig angeformte Abstandhalter aufweist und daß die Abstandhalter mit dem Nutgrund (6.3) in Berührung bringbar sind.

8. Verwendung einer Dichtungsanordnung nach Anspruch 1 bis 7, zur Abdichtung einer rotierenden, mit Steuermedium druckbeaufschlagten und axial hin- und herbewegbaren Separatorentrommel in einem mit zumindest einer im wesentlichen radialen Austrittsöffnung versehenen Gehäuse eines selbstentleerenden Separators, wobei die Austrittsöffnung durch die axialbewegliche Separatorentrommel zu öffnen bzw. verschließbar ist.

## Claims

1. A sealing arrangement for sealing a circumferential gap (1) between two parts which can be moved relative to one another substantially only in a translatory manner, the parts being formed by an inner part (2) and an outer part (3), which parts are separated by the circumferential gap (1) and are arranged concentrically relative to one another and, during proper use, can be moved at the same speed about a common axis of rotation (4), comprising a centrifugal-force seal (5) which under axial prestress is snapped into a groove (6) in the inner part (2), said groove being open in the direction of the circumferential gap (1), and contacts at least one of the axial boundary surfaces (6.1, 6.2) of the groove (6), bearing against it with at least one axial sealing lip (7), and at an increasing rotational speed can additionally be expanded elastically in the radial direction by a control medium, upon which a centrifugal force acts, and can be placed with at least one radial sealing lip (8, 11) against the inner side (3.1) of the outer part (3), said inner side facing the circumferential gap (1), characterized in that the centrifugal-force seal (5) has two radial sealing lips (8, 11), in that the axial sealing lip (7) and the radial sealing lip (8) of the centrifugal-force seal (5), facing the control medium, form a diagonal sealing plane (9) which encloses an angle of 15 to 75° with the axis of rotation (4), and in that the radial sealing lip (8) facing the control medium is designed in such a way that its contact pressure against the inner side (3.1) of the outer part (3) is less than the contact pressure of the radial sealing lip (11) facing away from the control medium.

2. A sealing arrangement according to claim 1, characterized in that the angle is 30 to 60°.

3. A sealing arrangement according to either of claims 1 and 2, characterized in that a back-up ring (10) is disposed ahead of the axial sealing lip (7) and the radial sealing lip (8) on the side facing away from the control medium, in that the back-up ring (10) is arranged in the groove (6) of the inner part (2) and covers the circumferential gap (1) at least partially in the radial direction, at least during proper use.

4. A sealing arrangement according to any of claims 1 to 3, characterized in that the two radial sealing lips (8, 11) of the centrifugal-force seal (5) are arranged adjacent to one another with spacing in the axial direction.

5. A sealing arrangement according to any of claims 1 to 4, characterized in that the centrifugal-force seal (5) is constructed as a compact seal.

6. A sealing arrangement according to any of claims 1 to 4, characterized in that the centrifugal-force seal (5) is designed as a lip seal.

7. A sealing arrangement according to any of claims 1 to 6, characterized in that the centrifugal-force seal (5) has integrally moulded-on spacers, on the side facing the groove base (6.3), and in that the spacers can be brought into contact with the groove base (6.3).

8. The use of a sealing arrangement according to any of claims 1 to 7, for sealing a rotating separator drum, which can be pressurized with control medium and can be moved axially back and forth, in a housing of a self-emptying separator, said housing being provided with at least one substantially radial outlet opening, said outlet opening being openable and closable by means of the axially movable separator drum.

## Revendications

1. Dispositif d'étanchéité pour l'étanchéification d'une fente circonférentielle (1) située entre deux pièces mobiles l'une par rapport à l'autre, essentiellement en translation, les pièces étant formées par une pièce interne (2) et une pièce externe (3) qui sont séparées par la fente circonférentielle (1) et agencées de manière concentrique et qui peuvent tourner à la même vitesse autour d'un axe de rotation (4) commun pendant l'utilisation conforme aux prescriptions, comprenant une garniture d'étanchéité centrifuge (5) qui est emboîtée, sous l'effet d'une précontrainte axiale, dans une gorge (6) de la pièce interne (2) ouverte en direction de la fente circonférentielle (1) et est en contact étroit, par au moins une lèvre d'étanchéité axiale (7), avec au moins une des surfaces de délimitation axiales (6.1, 6.2) de la gorge (6) et qui, lorsque la vitesse de rotation augmente, peut en outre s'élargir élastiquement dans la direction radiale sous l'action d'un milieu de commande soumis à la force centrifuge et qui peut s'appuyer, par au moins une lèvre d'étanchéité radiale (8, 11), sur la face interne (3.1) de la pièce externe (3) située du côté de la lente circonférentielle (1), caractérisé en ce que la garniture d'étanchéité centrifuge (5) est pourvue de deux lèvres d'étanchéité radiales (8, 11), en ce que la lèvre d'étanchéité axiale (7) et la lèvre d'étanchéité radiale (8) de la garniture d'étanchéité centrifuge (5), laquelle lèvre d'étanchéité radiale est située du côté du milieu de commande, définissent un plan d'étanchéité diagonal (9) qui forme avec l'axe de rotation (4) un angle de 15 à 75°, et en ce que la lèvre d'étanchéité radiale (8) située du côté du milieu de commande est exécutée de manière à ce que sa pression sur la face interne (3.1) de la pièce externe (3) soit inférieure à la pression de la lèvre d'étanchéité radiale (11) située du côté opposé au milieu de commande.

2. Dispositif d'étanchéité selon la revendication 1, caractérisé en ce que l'angle mesure de 30 à 60°.

3. Dispositif d'étanchéité selon les revendications 1 à 2, caractérisé en ce qu'une bague d'appui (10) est placée du côté éloigné du milieu de commande avant la lèvre d'étanchéité axiale (7) et la lèvre d'étanchéité radiale (8), en ce que la bague d'appui (10) est située dans la gorge (6) de la pièce interne (2) et couvre, au moins partiellement dans la direction radiale, la fente circonférentielle (1), au moins pendant l'utilisation conforme aux prescriptions.

4. Dispositif d'étanchéité selon les revendications 1 à 3, caractérisé en ce que les deux lèvres d'étanchéité radiales (8, 11) de la garniture d'étanchéité centrifuge (5) sont conjuguées voisines l'une de l'autre dans la direction axiale, et présentent une distance entre elles.

5. Dispositif d'étanchéité selon les revendications 1 à 4, caractérisé en ce que la garniture d'étanchéité centrifuge (5) est exécutée sous forme de joint compact.

6. Dispositif d'étanchéité selon les revendications 1 à 4, caractérisé en ce que la garniture d'étanchéité centrifuge (5) est exécutée sous forme de joint à lèvres.

7. Dispositif d'étanchéité selon les revendications 1 à 6, caractérisé en ce que la garniture d'étanchéité centrifuge (5) présente, sur la face située du côté du fond (6.3) de la gorge, des écarteurs solidaires de la garniture d'étanchéité centrifuge en ce que ces écarteurs peuvent être mis en contact avec le fond (6.3) de la gorge.

8. Utilisation d'un dispositif d'étanchéité selon les revendications 1 à 7 pour l'étanchéification d'un tambour rotatif de séparateur centrifuge alimenté en pression par un milieu de commande et animé d'un mouvement de va-et-vient axial dans un carter d'un séparateur centrifuge à auto-vidage pourvu d'au moins une ouverture de sortie essentiellement radiale, l'ouverture de sortie pouvant être ouverte ou fermée par le tambour du séparateur centrifuge mobile dans la direction axiale.
